# EUROPÄISCHE PATENTSCHRIFT

(11) **EP 0 544 664 B1**
(45) Veröffentlichungstag und Bekanntmachung des Hinweises auf die Patenterteilung: **18.10.1995**
(21) Anmeldenummer: 91900724.5
(22) Anmeldetag: 17.12.1990
(51) Int. Cl.: C08B 15/00, B01J 20/22

(54) **PERLFÖRMIGE CELLULOSEPRODUKTE FÜR TRENN- UND TRÄGERMATERIALIEN UND IHRE HERSTELLUNG**
BEAD-SHAPED CELLULOSE PRODUCTS FOR SEPARATING AND CARRIER MATERIALS AND THEIR MANUFACTURE
PRODUITS CELLULOSIQUES EN PERLES DESTINES A DES SUBSTANCES DE SEPARATION ET DE SUPPORT, AINSI QUE LEUR FABRICATION

(30) Priorität: 29.12.1989 DD 336724
(43) Veröffentlichungstag der Anmeldung: 09.06.1993
(73) Patentinhaber: FRAUNHOFER-GESELLSCHAFT ZUR FÖRDERUNG DER ANGEWANDTEN FORSCHUNG E.V., 80636 München (DE)
(72) Erfinder: LOTH, Fritz, D-1530 Teltow (DE); FANTER, Carola, D-1530 Teltow (DE)
(86) Internationale Anmeldenummer: DE9000980
(87) Internationale Veröffentlichungsnummer: WO9109878

(56) Entgegenhaltungen:
- EP-A- 0 047 064
- EP-A- 0 233 620
- EP-A- 0 321 597
- WO-A-89/09643
- US-A- 4 175 183

## Beschreibung

Die Erfindung betrifft perlförmige Celluloseprodukte mit einstellbarer Porosität; die als Trenn- und Trägermaterialien in der Chemie, Biotechnologie Medizin und Pharmazie für analytische und präparative Zwecke eingesetzt werden können und ein Verfahren zu ihrer Herstellung.

Partikuläre Cellulosematerialien gewinnen in den letzten Jahren vor allem als stationäre Phasen bei chromatografischen Trenn- und Reinigungsprozessen, aber auch als selektive spezifische Adsorbentien; zunehmend an Bedeutung. Zur Herstellung solcher mehr oder weniger porösen Cellulosepartikel sind bereits eine Vielzahl von Verfahren vorgeschlagen worden. Eine wesentliche Zielstellung dieser Verfahren ist die Herstellung kugelförmiger poröser Teilchen, um die resultierenden Produkte in optimaler Weise den jeweiligen meist recht speziellen Trennaufgaben, beispielsweise der Trennung von Proteinen mittels Gelchromatografie, anzupassen.
Die Herstellung poröser kugelförmiger Celluloseteilchen erfolgt in den meisten Fällen durch Herstellung einer Cellulose- oder Cellulosederivatlösung, Verformung der Lösung zu Tröpfchen, Koagulation der Tröpfchen und Regenerierung der Cellulose.
Unterschiede bestehen vor allem in der Art und Weise der Tröpfchenbildung` z.B. durch Eintropfen bzw. Einsprühen der Celluloselösung in ein geeignetes Fällbad oder durch Dispergieren der Celluloselosung in einem geeigneten Lösungsmittel, und der Art und Weise der Koagulation bzw. Regenerierung der Cellulose (vgl. US-PS 2 543 928, US-PS 3 597 350, DE-OS 2 717 965. DE-OS 2 138 905, DD-PS 118 887, JP-PS 80-44312).
Problematisch bei allen diesen Verfahren ist die Einstellung einer definierten Porosität der Cellulosematrix.
Aus diesem Grunde wurden verschiedene Verfahren vorgeschlagen, wie man z.B. über die Cellulosekonzentration (DE-OS 1 792 230) oder durch Zusätze zur Cellulosederivatlösung als Porenbildner (US-PS 4 312 980) die Porengröße variieren kann. Gute Ergebnisse wurden erzielt, wenn die Porenstruktur durch zusätzliche Verwendung eines bifunktionellen Vernetzungsmittels der allgemeinen Formel X-R-Z fixiert wird, wobei X und Z Halogen- oder Epoxygruppen und R einen C3- bis C10-Alkylenrest darstellen (US-PS 3 598 245). Die hierbei erhaltener, Produkte sind zwar prinzipiell für gelchromatografische Trennungen von gelösten hochmolekularen Substanzen geeignet, doch weisen unmodifizierte Celluloseteilchen den generellen Nachteil auf daß sie mit verschiedenen Proteinen eine unspezifische Wechselwirkung eingehen, wodurch ihre universelle Einsetzbarkeit eigeschränkt wird.
Günstigere Eigenschaften besitzen hydroxyethyl- bzw. hydroxypropylgruppenhaltige Produkte, die gemäß der US-PS 3 598 245 durch gleichzeitige Umsetzung von getrockneten Regeneratcelluloseteilchen mit einem Vernetzungsmittel hergestellt werden können. Diese Lösung weist jedoch mehrere Nachteile auf. So wird z.B. das Laufverhalten in chromatografischen Säulen durch den Einsatz faserförmiger Regeneratcellulosepartikel ungünstig beeinflußt. Ein weiterer Nachteil ist die ungenügende mechanische Stabilität der Gele, die insbesondere bei einem hohen Gehalt an Hydroxypropylgruppen und niedrigem Vernetzungsgrad zu verringerten Durchflußgeschwindigkeiten oder gar zu Verstopfungen der Säulen führen können. Auch ist von Nachteil, daß sich diese hochgequollenen Gele bereits in Wasser teilweise auflösen (J.S. Ayers, M.J. Petersen, B.E. Sheerin, G.S. Bethell: J. Chromatography 294(1984), S. 195-205) und damit für chromatografische Zwecke nicht einsetzbar sind. Der für gelchromatografische Trennungen ausnutzbare Porositätsbereich ist relativ eng begrenzt und liegt unter 5x10⁴ Dalton.

Ziel der Erfindung ist es, perlförmige Celluloseprodukte und ein Verfahren zur Herstellung perlförmiger poröser Celluloseprodukte mit verbesserten Eigenschaften, insbesondere einer hydrophilen, reversibel quellbaren Cellulosematrix mit einer in weiten Grenzen gezielt einstellbaren Porenstruktur bei gleichzeitiger Unterdrückung unspezifischer Wechselwirkungen mit Biomakromolekülen zu entwickeln.

Der Erfindung liegt die Aufgabe zugrunde, durch eine geeignete Vorbehandlung von Regeneratcelluloseteilchen verbunden mit einer chemischen Modifizierung zu perlförmigen Celluloseprodukten zu kommen, die vorteilhafte Eigenschaften, insbesondere eine hydrophile, reversibel quellbare Cellulosematrix mit definierter Porosität und guter mechanischer Stabilität besitzen und möglichst keine unspezifischen Wechselwirkungen mit Proteinen aufweisen.

Erfindungsgemäß wird die Aufgabe dadurch gelöst, daß wasserfeuchte perlförmige makroporöse Regeneratcelluloseperlen mit einem Wassergehalt von 85 bis 95 g/100g Gesamtmasse zunächst bis auf einen definierten Wassergehalt zwischen 10 und 95 g/100g Gesamtmasse getrocknet und anschließend im alkalischen Medium mit einer bifunktionellen C₂-C₄-Halogen- und/oder Epoxyverbindung als Vernetzungsmittel und einer monofunktionellen Halogen- oder Epoxyverbindung als Hydroxyalylierungsmittel im, geschlossenen System bei 313 bis 373 K während 10 bis 360 min umgesetzt werden. Die Aufarbeitung bzw. Reinigung der resultierenden porösen Cellulosederivatteilchen erfolgt in bekannter Weise durch Neutralisation von überschüssigem Alkalihydroxid, gründliches Auswaschen der Nebenprodukte, Klassierung sowie ggf. Trocknung. Im Falle einer Trocknung erweist sich eine vorherige zumindest teilweise Verdrängung des Wassers durch Methanol, Ethanol oder Aceton bzw. eine Gefriertrocknung als vorteilhaft.
Erfindungsgemäß verwendet man als Celluloseausgangsmaterial wasserfeuchte makroporöse perlförmige Teilchen aus Regeneratcellulose mit einem Durchschnittspolymerisationsgrad (DP) von 150 bis 500, deren Ausschlußgrenze für Makromoleküle zwischen 10⁵ und 3x10⁷ Dalton liegen. Vorteilhaft für die spätere Anwendung z.B. in chromatografischen Säulen ist es, von sphärischen Celluloseteilchen auszugehen, deren Teilchengröße je nach Einsatzzweck im Bereich von 1 bis 2 000 µm liegen kann, vorzugsweise jedoch 50 bis 250 µm beträgt.
Wesentlich für die gezielte Einstellung einer definierten Porosität der Cellulosematrix ist die partielle Trocknung der Celluloseteilchen bis auf einen Restwassergehalt von 10 bis 95 g/100g Gesamtmasse, wobei die Trocknung in üblicher Weise z.B. durch Verdampfen des Wassers bei erhöhter Temperatur, ggf. auch durch Verdrängung mit einem mit Wasser mischbaren Lösungsmittel, wie z.B. C₂-C₃-Alkoholen, Aceton, Dioxan, Tetrahydrofuran, Dimethylformamid, Dimethylsulfoxid erfolgen kann. Das derart vorbehandelte Cellulosematerial wird dann in einem geschlossenen Gefäß unter Druck mit dem bifunktionellen Vernetzungsmittel und der monofunktionellen Halogen- oder Epoxiverbindung als Hydroxyalkylierungsmittel unter Zusatz von Alkalihydroxid umgesetzt. Als bifunktionelle Vernetzungsmittel können beispielsweise Epichlorhydrin, Dichlorhydrin, Dibrompropanol oder Diepoxibutan verwendet werden, während bevorzugte monofunktionelle Hydroxyalkylierungsmittel Ethylenoxid, Propylenoxid, 2-Chlorethanol und 2-Chlorpropanol sind. Außer durch das Ausmaß der Vortrocknung bzw. Wasserentfernung werden die Produkteigenschaften durch die eingesetzten Mengen an Vernetzungs- bzw. Hydroxyalkylierungsmittel bestimmt.
Erfindungsgemäß werden für die Erzielung der gewünschten Porositätseigenschaften 0,01 bis 0,5 Mol Vernetzungsmittel und 0 bis 2,5 Mol, vorzugsweise 0,01 bis 2,5 Mol, Hydroxyalkylierungsmittel pro Mol Monomereinheit der Cellulose eingesetzt.
Als alkalisches Medium wird eine wäßrige 5 bis 45 Masseanteile in % enthaltende Lösung eines Alkalimetallhydroids, vorzugsweise Natriumhydroxid, verwendet, wobei die einzusetzende Menge mindestens dem stöchiometrischen Verbrauch durch die Reaktanten, insbesondere jedoch 0,1 bis 10 Mol, vorzugsweise jedoch 0,5 bis 5 Mol pro Mol Monomereinheit der Cellulose entspricht.
Der Wassergehalt in der Reaktionsmischung wird zur Erzielung hoher Reagenzausbeuten möglichst gering gehalten. Dabei können auch inerte oder weitgehend inerte organische Lösungsmittel, wie z.B. Toluen, Benzen, Chlorbenzen, Ethanol, Propanol oder Aceton, zur besseren Durchmischung und zur besseren Verteilung der Reaktanten zugesetzt werden. Die Menge an zuzusetzendem Lösungsmittel beträgt vorzugsweise das 2- bis 50-fache bezogen auf die eingesetzte Cellulosemasse.
In einer speziellen Ausführungsform des erfindungsgemäßen Verfahrens werden zur Einführung zusätzlicher funktioneller Gruppen weitere Veretherungsmittel zugesetzt. Die Zugabe kann dabei gleichzeitig mit dem Vernetzungsmittel, dem Hydroxyalkylierungsmittel und der Natronlauge oder bereits vor der Trocknung der wasserfeuchten makroporösen Perlcellulose erfolgen. Geeignete Veretherungsmittel zur Einführung ionischer Gruppen sind Halogenalkylcarbonsäuren, wie z.B. Monochloressigsäure, Halogenalkylphosphonsäuren, z.B. Chlormethylphosphonsäure, Halogenalkysulfonsäuren, z.B. 2-Chlorethylsulfonsäure, oder deren Salze sowie Halogenalkylamine, wie z.B. 2-Chlorethyldiethylamin. Die zur Erzielung üblicher Austauschkapazitäten benötigten Mengen an Veretherungsmittel betragen 0,2 bis 1,0 Mol pro Mol Monomereinheit der Cellulose.
Die Vorteile des Verfahrens bestehen vor allem darin, daß durch die Verwendung der makroporösen Cellulosematrix als Ausgangsmaterial und deren gezielte partielle Trocknung das Porensystem der Cellulose in definierter Weise eingestellt werden kann. Die hierbei erhaltenen perlförmigen Cellulosematerialien sind auf Grund ihrer guten mechanischen Eigenschaften in besonderem Maße für gelchromatografische Zwecke bis zu Molmassen von 10⁶ Dalton geeignet. Durch die gleichzeitige Einführung der stark hydrophilen Hydroxyalkylgruppen wird die unspezifische Wechselwirkung mit Biomakromolekülen unterdrückt. Außerdem sind die Produkte auf Grund ihrer stark hydrophilen Natur, im Gegensatz zu unmodifizierter Regeneratcellulose, nach geeigneter Trocknung nahezu vollständig reversibel quellbar, wodurch nicht nur die Handhabbarkeit verbessert wird, sondern auch die Einsatzmöglichlichkeiten erweitert werden.

### Beispiel 1

91 g wasserfeuchte perlförmige Regeneratcellulose mit einem DP von 250 (= 10 g = 62 mmol Cellulose) mit einer Teilchengröße von 80 bis 200 µm, einem Wassergehalt von 89 g/100g Gesamtmasse und einer Ausschlußgrenze von 10⁷ Dalton werden mit 15 ml 30 Masseanteile in % enthaltender Natronlauge (150 mmol), 5 ml Propylenoxid (72 mmol) und 0,4 ml Epichlorhydrin (5 mmol) intensiv vermischt und in einen druckfesten Stahlbecher mit einem Fassungsvermögen von 300 ml überführt. Nach dem Verschließen des Bechers wird das Reaktionsgemisch unter ständiger Bewegung des Bechers in einem Wasserbad 1,5 h auf 333 K erhitzt. Anschließend wird der Becher auf ca. 303 K abgekühlt, geöffnet und das Reaktionsgut in ein Becherglas mit 500 ml Wasser eingetragen. Das Produkt wird auf einer Fritte abgesaugt, restliches Alkali mit verdünnter (1 N) Salzsäure neutralisiert und bis zur Chloridfreiheit mit Wasser gewaschen. Es wird ein weißes perlförmiges Cellulosederivat erhalten (10,4 g Trockenmasse) mit einem Sedimentationsvolumen von 13,4 ml/g und einem Wasserückhaltevermögen von 485 %. Die mit Hilfe von Dextranen unterschiedlichen Molekulargewichtes (MG) sowie mit Proteinen als Modellsubstanzen chromatografisch bestimmten Verteilungskoeffizienten (Kₐᵥ) sind in Tabelle 1 dargestellt (Probe 1).

### Beispiel 2

Analog Beispiel 1 wird wasserfeuchte perlförmige Regeneratcellulose derivatisiert, wobei anstelle von 0,4 ml Epichlorhydrin 1,6 ml Epichlorhydrin (20 mmol) eingesetzt werden.
Es wird ein weißes perlförmiges Cellulosederivat (Probe 2) erhalten mit einem Sedimentationsvolumen von 14,9 ml/g und einem Wasserrückhaltevermögen von 462 %.
überraschendes Ergebnis ist, daß sich die Quellung der Produkte, die ein Maß für das Porenvolumen ist, von, Beispiel 1 und 2 praktisch kaum unterscheidet, obwohl die Menge an Vernetzungsmittel stark variiert wurde. Auch die Kₐᵥ-Werte liegen in der gleichen Größenordnung.

### Beispiel 3

Wasserfeuchte perlförmige Regenratcellulose mit einer Teilchengröße von 80 - 200 µm und einem Wassergehalt von 89 g/100g Gesamtmasse wird zunächst im Rotationsverdampfer bis auf einen Wassergehalt von 49 g/100g Gesamtmasse getrocknet. 20 g des vorgetrockneten Materials werden wie in Beispiel 1 mit 15 ml 30 Masseanteile in % enthaltender Natronlauge, 5 ml Propylenoxid und 0,4 ml Epichlorhydrin umgesetzt und aufgearbeitet. Es wird ein weißes perlförmiges Celluloseprodukt erhalten mit einem Sedimentationsvolumen von 16 ml/g und einem Wasserrückhaltevermögen von 550 %. Die Kₐᵥ-Werte sind in Tabelle dargestellt (Probe 3). Sie liegen verglichen mit Probe 1 deutlich niedriger.

### Beispiel 4

Wasserfeuchte makroporöse Perlcellulose mit einer Teilchengröße von 80 - 200 µm und einem Wassergehalt von 89 g/100g Gesamtmasse wird zunächst im Rotationsverdampfer bei 333 K bis auf einem Restwassergehalt von ca. 10 g/100g Gesamtmasse getrocknet. 11,0 g des vorgetrockneten Perlcellulosematerials werden wie in Beispiel 1 mit 15 ml 30 Masseanteile in % enthaltender Natronlauge, 5 ml Propylenoxid und 0,4 ml Epichlorhydrin umgesetzt und aufgearbeitet. Es wird ein nahezu durchscheinendes gequollenes Cellulosederivat erhalten (11,0 g Trockenmasse) mit einem Sedimentationsvolumen von 21,9 ml/g und einem Wasserrückhaltevermögen von 655 %. Die Kₐᵥ-Werte sind ebenfalls in Tabelle 1 dargestellt. Sie liegen deutlich niedriger als bei den Proben 1 und 3.

### Beispiel 5

Analog Beispiel 4 wird Perlcellulose getrocknet und derivatisiert, wobei anstelle von 0,4 ml Epichlorhydrin 1,6 ml Epichlorhydrin (20 mmol) (Probe 5) bzw. 0,2 ml Epichlorhydrin (2,5 mmol) (Probe 6) eingesetzt werden. Die Sedimentationsvolumina der resultierenden Produkte betragen 7,9 bzw. 47,4 ml/g und die Werte für das Wasserrückhaltevermögen 294 bzw. 894 %. Im Gegensatz zu den feucht eingesetzten makroporösen Perlcellulosen werden bei den vorgetrockneten Perlcellulosen mit abnehmender Vernetzermittelmenge die Quellwerte wesentlich erhöht. Die Kₐᵥ-Werte liegen jedoch trotz erhöhter Quellwerte deutlich niedriger als bei den vorgetrockneten Celluloseperlen mit einem Wassergehalt von 10 und 50 g/100g Gesamtmasse (Tabelle 1).

### Beispiel 6

91 g wasserfeuchte makroporöse Perlcellulose wird mit einer Lösung von 3 g 2-Chlorethyl-diethylamin-Hydrochlorid in 30 ml Wasser 30 min im Rotationsverdampfer vermischt und dann bis auf einen Restwassergehalt von 10 g/100g Gesamtmasse getrocknet. Die imprägnierten Celluloseperlen werden in einen Edelstahlbecher überführt, mit 15 ml 30 Masseanteile in % enthaltender Natronlauge, 5 ml Propylenoxid und 1,6 ml Epichlorhydrin vermischt und nach Verschließen des Bechers 1,5 h auf 353 K erhitzt. Die Aufarbeitung des Produktes erfolgt wie in Beispiel 1. Die erhaltene Diethylaminoethyl-Perlcellulose besitzt eine Austauschkapazität von 0,8 meg/g und ein Sedimentationsvolumen von 5,2 ml/g.

### Beispiel 7

Analog Beispiel 6 wird Perlcellulose modifiziert, wobei jedoch 6 g 2-Chlorethyl-diethylamin-Hydrochlorid, 0,4 ml Epichlorhydrin, aber kein Propylenoxid eingesetzt wird. Die erhaltene Diethylaminoethyl-Perlcellulose besitzt eine Austauschkapazität von 1,3 meq/g und ein Sedimentationsvolumen von 7,2 ml/g.

### Beispiel 8

Analog Beispiel 6 wird Perlcellulose modifiziert, wobei jedoch anstelle von 2-Chlorethyl-diethylamin-Hydrochlorid 3 g Natrium-Monochloroacetat als Veretherungsmittel verwendet werden. Die erhaltene Carboxymethyl-Perlcellulose besitzt eine Austauschkapazität von 1,0 meq/g und ein Sedimentationsvolumen von 10,1 ml/g.

### Beispiel 9

Analog Beispiel 6 wird Perlcellulose modifiziert, wobei anstelle von 2-Chlorethyl-diethylamin-Hydrochlorid 6 g Natrium-Monochloroacetat als Veretherungsmittel, 0,4 ml Epichlorhydrin, aber kein Propylenoxid verwendet wird. Die erhaltene Carboxymethyl-Perlcellulose besitzt eine Austauschkapazität von 1,5 meq/g und ein Sedimentationsvolumen von 8,2 ml/g.

**Tabelle 1**

| Verteilungskoeffizienten (Kₐᵥ) für vernetzte Hydroxypropyl-Perlcellulose (Bettvolumen: 20 ml) | | | | | | |
|---|---|---|---|---|---|---|
| Dextran Dalton | Kₐᵥ-Werte | | | | | |
| | Probe 1 | Probe 2 | Probe 3 | Probe 4 | Probe 5 | Probe 6 |
| 2000 000 | 0,298 | 0,256 | 0,0 | 0,0 | 0,0 | 0,0 |
| 500 000 | 0,520 | 0,460 | 0,046 | 0,0 | 0,0 | 0,007 |
| 100 000 | 0,695 | 0,655 | 0,216 | 0,020 | 0,0 | 0,050 |
| 35 000 | | | 0,348 | 0,080 | 0,020 | 0,160 |
| 8 000 | | | 0,535 | 0,310 | 0,034 | 0,429 |
| 4 000 | | | 0,623 | 0,425 | 0,143 | 0,545 |
| 180⁺ | | | 0,743 | 0,730 | 0,463 | 0,878 |

| | | | | | | |
|---|---|---|---|---|---|---|
| ⁺=Glukose | | | | | | |

## Patentansprüche

1. Perlförmige Celluloseprodukte für Trenn- und Trägermaterialien auf Basis vernetzter hydroalkylierter Regeneratcelluloseteilchen, erhältlich durch die Umsetzung partiell auf einen definierten Wassergehalt zwischen 10 und 90 g pro 100 g Gesamtmasse getrockneter wasserfeuchter makroporöser 1 bis 2000µm großer Regenratcelluloseperlen, die einen Wassergehalt von 85 bis 95 g pro 100 g Gesamtmasse, eine Ausschlußgrenze von 10⁵ bis 3 * 10⁷ Dalton aufweisen, in wäßrig alkalischen Medium mit 0,1 bis 10 Mol Alkalihydroxid als wäßrige Lösung in einer Konzentration von 5 bis 45 Masseanteilen Alkalihydroxid in %, pro Mol Monomereinheit der Cellulose mit 0,01 bis 0,5 Mol einer bifunktionellen Verbindung der Formel X - R' - Y , wobei X,Y eine Halogen- und/oder Epoxigruppe und R' ein C₂- bis C₄-Alkylenrest, -CH(CH₂OH)-CH₂-oder -CH₂-CH(OH)-CH₂- bedeuten, pro Mol Monomereinheit der Cellulose und 0 bis 2,5 Mol einer monofunktionellen Verbindung der Formel Z-R, wobei Z entweder eine Epoxigruppe und R gleich H oder CH₃ ist, oder Z ein Halogen und R eine C₂H₄-OH-, CH₂-CH(OH)-CH₂- oder C₃H₆-OH-Gruppe ist, pro Mol Monomereinheit der Cellulose, gegebenenfalls unter Zusatz weitgehend inerter organischer Lösungsmittel und/oder von 0,2 bis 1,0 Mol weiterer Veretherungsmittel pro Mol Monomereinheit der Cellulose im geschlossenen System, bei Temperaturen von 313 bis 373 K und in einer Zeit von 10 bis 360 Minuten.

2. Perlförmige Celluloseprodukte nach Anspruch 1, gekennzeichnet dadurch, daß die als Ausgangsmaterial verwendeten makroporösen perlförmigen Celluloseteilchen eine Teilchengröße von 50 bis 250 µm besitzen.

3. Perlförmige Celluloseprodukte nach Anspruch 1 und 2, gekennzeichnet dadurch, daß als bifunktionelle Verbindung Epichlorhydrin in einer Menge von 0,1 bis 0,4 Mol pro Mol Monomereinheit der Cellulose eingesetzt wird.

4. Perlförmige Celluloseprodukte nach Anspruch 1 und 2, gekennzeichnet dadurch; daß als monofunktionelle Epoxyverbindung Propylenoxid in einer Menge von 0,01 bis 2,5 Mol pro Cellulose eingesetzt wird.

5. Perlförmige Celluloseprodukte nach Anspruch 1, gekennzeichnet dadurch, daß als weitere Veretherungsmittel Halogenalkylcarbonsäuren, -phosphonsäuren, -sulfonsäuren und/oder deren Salze oder Halogenalkylamine verwendet werden.

6. Perlförmige Celluloseprodukte nach Anspruch 1 und 5, gekennzeichnet dadurch, daß als weiteres Veretherungsmittel 2-Chlorethyl-diethylamin-hydrochlorid oder Monochloressigsäure und/oder Natrium-monochloracetat eingesetzt wird.

7. Perlförmige Celluloseprodukte nach Anspruch 1, gekennzeichnet dadurch, daß als weitgehend inerte Lösungsmittel C₁- bis C₃-Alkohole; Aceton, Dimethylformamid und/oder Dimethylsulfoxid in Mengen von 10 bis 80 g, bezogen auf 100 g flüssige Phase, eingesetzt werden.

8. Verfahren zur Herstellung perlförmiger Celluloseprodukte zur Verwendung als Trenn- und Trägermaterialien durch Vernetzung und gleichzeitige Hydroxyalkylierung von Regeneratcelluloseteilchen im alkalischen Medium, gekennzeichnet dadurch, daß wasserfeuchte makroporöse 1 bis 2000µm große Regeneratcelluloseperlen mit einem Wassergehalt von 85 bis 95 g pro 100 g Gesamtmasse und einer Ausschlußgrenze von 10⁵ bis 3 * 10⁷ Dalton bis auf einen definierten Wassergehalt zwischen 10 und 90 g pro 100 g Gesamtmasse getrocknet, anschließend im wäßrig alkalischen Medium mit 0,1 bis 10 Mol Alkalihydroxid als wäßrige Lösung in einer Konzentration von 5 bis 45 Masseanteilen Alkalihydroxid in %, pro Mol Monomereinheit der Cellulose mit 0,01 bis 0,5 Mol einer bifunktionellen Verbindung der Formel X - R' - Y, wobei X,Y eine Halogen- und/oder Epoxigruppe und R' ein C₂- bis C₄-Alkylenrest, -CH(CH₂OH)-CH₂- oder -CH₂-CH(OH)-CH₂-bedeuten, pro Mol Monomereinheit der Cellulose und 0 bis 2,5 Mol einer monofunktionellen Verbindung der Formel Z-R, wobei Z entweder eine Epoxigruppe und R gleich H oder CH₃ ist, oder Z ein Halogen und R eine C₂H₄-OH-, CH₂-CH(OH)-CH₂- oder C₃H₆-OH-Gruppe ist, pro Mol Monomereinheit der Cellulose, gegebenenfalls unter Zusatz weitgehend inerter organischer Lösungsmittel und/oder von 0,2 bis 1,0 Mol weiterer Veretherungsmittel pro Mol Monomereinheit der Cellulose im geschlossenen System, bei Temperaturen von 313 bis 373 K und in einer Zeit von 10 bis 360 Minuten umgesetzt, in bekannter Weise gewaschen, klassiert und gegebenenfalls getrocknet werden.

## Claims

1. Bead-shaped cellulose products for separating and carrier materials based on crosslinked hydroalkylated regenerated cellulose particles, which can be obtained by reacting water-moist macroporous regenerated cellulose beads 1 to 2,000 µm in size partially dried to a defined water content between 10 and 90 g per 100 g of total mass and which have a water content of 85 to 95 g per 100 g of total mass, an exclusion limit of 10⁵ to 3 x 10 ⁷ daltons, in aqueous alkaline medium having 0.1 to 10 moles of alkali metal hydroxide as aqueous solution at a concentration of 5 to 45 mass proportions of alkali metal hydroxide in %, per mole of monomer unit of cellulose, with 0.01 to 0.5 mole of a bifunctional compound of formula X - R' - Y, wherein X, Y denote a halogen and/or epoxy group and R' denotes a C₂ to C₄ alkylene radical, -CH(CH₂OH)-CH₂- or -CH₂-CH(OH)-CH₂-, per mole of monomer unit of cellulose and 0 to 2.5 mole of a monofunctional compound of formula Z-R, wherein Z is either an epoxy group and R is equal to H or CH₃, or Z is a halogen and R is a C₂H₄-OH, CH₂-CH(OH)-CH₂ or C₃H₆-OH group, per mole of monomer unit of cellulose, optionally with addition of largely inert organic solvents and/or of 0.2 to 1.0 mole of further etherification agents per mole of monomer unit of cellulose in a closed system, at temperatures of 313 to 373 K and in a period of 10 to 360 minutes.

2. Bead-shaped cellulose products according to claim 1, characterised in that the macroporous bead-shaped cellulose particles used as starting material have a particle size of 50 to 250 µm.

3. Bead-shaped cellulose products according to claim 1 and 2, characterised in that epichlorohydrin is used as bifunctional compound in an amount from 0.1 to 0.4 mole per mole of monomer unit of cellulose.

4. Bead-shaped cellulose products according to claim 1 and 2, characterised in that propylene oxide is used as monofunctional epoxy compound in an amount from 0.01 to 2.5 moles per cellulose.

5. Bead-shaped cellulose products according to claim 1, characterised in that halogen-alkylcarboxylic acids, halogen-alkylphosphonic acids, halogen-alkylsulphonic acids and/or salts thereof or halogenalkylamines are used as further etherification agents.

6. Bead-shaped cellulose products according to claim 1 and 5, characterised in that 2-chloroethyl-diethylamine hydrochloride or monochloroacetic acid and/or sodium monochloroacetate is used as further etherification agent.

7. Bead-shaped cellulose products according to claim 1, characterised in that C₁ to C₃ alcohols, acetone, dimethylformamide and/or dimethylsulphoxide are used as largely inert solvents in amounts from 10 to 80 g, based on 100 g of liquid phase.

8. Process for preparing bead-shaped cellulose products for use as separating and carrier materials by crosslinking and at the same time hydroxyalkylating regenerated cellulose particles in alkaline medium, characterised in that water-moist macroporous regenerated cellulose beads 1 to 2,000 µm in size and having a water content of 85 to 95 g per 100 g of total mass and an exclusion limit of 10⁵ to 3 x 10⁷ daltons are dried to a defined water content between 10 and 90 g per 100 g of total mass, then reacted in aqueous alkaline medium having 0.1 to 10 moles of alkali metal hydroxide as aqueous solution at a concentration of 5 to 45 mass proportions of alkali metal hydroxide in %, per mole of monomer unit of cellulose, with 0.01 to 0.5 mole of a bifunctional compound of formula X - R' - Y, wherein X, Y denote a halogen and/or epoxy group and R' denotes a C₂ to C₄ alkylene radical, -CH(CH₂OH)-CH₂- or -CH₂-CH(OH)-CH₂-, per mole of monomer unit of cellulose and 0 to 2.5 mole of a monofunctional compound of formula Z-R, wherein Z is either an epoxy group and R is equal to H or CH₃, or Z is a halogen and R is a C₂H₄-OH, CH₂-CH(OH)-CH₂ or C₃H₆-OH group, per mole of monomer unit of cellulose, optionally with addition of largely inert organic solvents and/or of 0.2 to 1.0 mole of further etherification agents per mole of monomer unit of cellulose in a closed system, at temperatures of 313 to 373 K and in a period of 10 to 360 minutes, washed in known manner, graded and optionally dried.

## Revendications

1. Produits cellulosiques en perles pour des matériaux de séparation et de support, à base de particules de cellulose régénérée réticulée hydroalkylée, qu'on peut obtenir grâce à la réaction de perles macroporeuses de cellulose régénérée, humidifiées avec de l'eau, qui ont une dimension de 1 à 2000 µm, une teneur en eau de 85 à 95 g pour 100 g de masse totale et une limite d'exclusion de 1x10⁵ à 3x10⁷ daltons, partiellement séchées jusqu'à l'obtention d'une teneur définie en eau comprise entre 10 et 90 g pour 100 g de masse totale, dans un milieu aqueux alcalin, avec 0,1 à 10 moles d'hydroxyde alcalin comme solution aqueuse à une concentration de 5 à 45 % en poids d'hydroxyde alcalin par mole d'unité monomère de cellulose, avec 0,01 à 0,5 mole d'un composé bifonctionnel répondant à la formule X-R'-Y, où X et Y signifient un groupe d'halogène et/ou un groupe époxy, et R' signifie un reste alkylène en C₂-C₄, -CH(CH₂OH)-CH₂- ou -CH₂-CH(OH)-CH₂-, par mole d'unité monomère de cellulose, et 0 à 2,5 moles d'un composé monofonctionnel répondant à la formule Z-R, où Z signifie un groupe époxy et R signifie H ou CH₃, ou Z est un halogène et R est un groupe C₂H₄-OH, CH₂-CH(OH)-CH₂- ou C₃H₆-OH, par mole d'unité monomère de cellulose, éventuellement avec l'addition de solvants organiques essentiellement inertes et/ou de 0,2 à 1,0 mole d'autres agents inertes d'éthérification, par mole d'unité monomère de cellulose, dans un système fermé, à des températures de 313 à 373°K et pendant une durée de 10 à 360 minutes.

2. Produits cellulosiques en perles selon la revendication 1, caractérisés en ce que les particules macroporeuses de cellulose en perles, utilisées comme matériau de départ, ont une dimension de 50 à 250 µm.

3. Produits cellulosiques en perles selon les revendications 1 et 2, caractérisés en ce qu'on utilise, comme composé bifonctionnel, de l'épichlorhydrine en une quantité de 0,1 à 0,4 mole par unité monomère de cellulose.

4. Produits cellulosiques en perles selon les revendications 1 et 2, caractérisés en ce qu'on utilise, comme composé époxy monofonctionnel, de l'oxyde de propylène en une quantité de 0,01 à 2,5 moles par unité monomère de cellulose.

5. Produits cellulosiques en perles selon la revendication 1, caractérisés en ce qu'on utilise, comme autres agents d'éthérification, des acides halogénoalkylcarboxyliques, des acides halogénoalkylphosphoniques, des acides halogénoalkylsulfoniques et/ou leurs sels, ou des halogénoalkylamines.

6. Produits cellulosiques en perles selon les revendications 1 et 5, caractérisés en ce qu on utilise, comme autre agent d'éthérification, le chlorhydrate de 2-chloréthyldiéthylamine ou l'acide monochloracétique et/ou le monochloracétate de sodium.

7. Produits cellulosiques en perles selon la revendication 1, caractérisés en ce qu'on utilise, comme solvants essentiellement inertes, des alcools en C₁-C₃, l'acétone, le diméthylformamide et/ou le diméthylsulfoxyde, en des quantités de 10 à 80 g pour 100 g de phase liquide.

8. Procédé de préparation de produits cellulosiques en perles destinés à être utilisés comme des matériaux de séparation et de support, par réticulation et hydroxyalkylation simultanée de particules de cellulose régénérée, en milieu alcalin, caractérisé en ce que des perles macroporeuses de cellulose régénérée, humidifiées avec de l'eau, qui ont une dimension de 1 à 2000 µm, une teneur en eau de 85 à 95 g pour 100 g de masse totale et une limite d'exclusion de 1x10⁵ à 3x10⁷ daltons, sont séchées jusqu'à l'obtention d'une teneur définie en eau comprise entre 10 et 90 g pour 100 g de masse totale, ensuite on les fait réagir, dans un milieu aqueux alcalin, avec 0,1 à 10 moles d'hydroxyde alcalin, comme solution aqueuse, a une concentration de 5 à 45 % en poids d'hydroxyde alcalin par mole d'unité monomère de cellulose, avec 0,01 à 0,5 mole d'un composé bifonctionnel répondant à la formule X-R'-Y, où X et Y signifient un groupe d'halogène et/ou un groupe époxy, et R' signifie un reste alkylène en C₂-C₄, -CH(CH₂OH)-CH₂-ou -CH₂-CH(OH)-CH₂-, par mole d'unité monomère de cellulose, et 0 à 2,5 moles d'un composé monofonctionnel répondant à la formule Z-R, où Z signifie un groupe époxy et R signifie H ou CH₃, ou Z est un halogène et R est un groupe C₂H₄-OH, CH₂-CH(OH)-CH₂- ou C₃H₆-OH, par mole d'unité monomère de cellulose, éventuellement avec l'addition de solvants organiques essentiellement inertes et/ou de 0,2 à 1,0 mole d'autres agents inertes d'éthérification, par mole d'unité monomère de cellulose, dans un système fermé, à des températures de 313 à 373°K et pendant une durée de 10 à 360 minutes, on les lave d une manière connue, on les classe et on les sèche éventuellement.
